Europäisches Patentamt

European Patent Office

Office européen des brevets

(11) Numéro de publication: **0 114 547**
**A2**

## (12) DEMANDE DE BREVET EUROPEEN

(21) Numéro de dépôt: **83402406.9**

(22) Date de dépôt: **13.12.83**

(51) Int. Cl.³: **G 10 K 11/34**
**G 01 S 15/02**

(30) Priorité: **17.12.82 FR 8221228**

(43) Date de publication de la demande:
**01.08.84 Bulletin 84/31**

(84) Etats contractants désignés:
**DE GB**

(71) Demandeur: THOMSON-CSF
173, Boulevard Haussmann
F-75379 Paris Cedex 08(FR)

(72) Inventeur: Nalewajk, Wladyslaw
THOMSON-CSF SCPI 173, bld Haussmann
F-75379 Paris Cedex 08(FR)

(72) Inventeur: Peynaud, François
THOMSON-CSF SCPI 173, bld Haussmann
F-75379 Paris Cedex 08(FR)

(74) Mandataire: Desperrier, Jean-Louis et al,
THOMSON-CSF SCPI 173, Bld Haussmann
F-75379 Paris Cedex 08(FR)

(54) Système acoustique à antennes paramétriques multifaisceaux.

(57) Sondeur acoustique multifaisceaux par émission paramétrique.
Dans un bateau ou dans un "poisson" remorqué est
monté une antenne d'émission. On applique sur les transducteurs formant cette antenne des impulsions à deux
fréquences primaires $F_0$ et $F_i$ et séquentiellement on forme
des voies d'emission aux fréquences secondaires ($f_1$, $f_2$, ...
$f_8$). A la réception on forme deux voies ($R_1$, $R_2$) et l'on sépare
les voies d'emission par filtrage, on obtient ainsi 2n voies
(n=8).
Application à la cartographie des fonds marins.

FIG.1

EP 0 114 547 A2

1

# SYSTEME ACOUSTIQUE A ANTENNES PARAMETRIQUES
## MULTIFAISCEAUX

L'objet de la présente invention est un sondeur acoustique multifaisceaux utilisant les propriétés non linéaires du milieu marin. La connaissance de la bathymétrie précise du fond des océans est et sera de plus en plus obtenue à l'aide de sondeurs dits multifaisceaux. Ces sondeurs ont la propriété, bien qu'étant directifs, de couvrir une zone significative de terrain sur le fond, ce qui par rapport aux sondeurs monofaisceaux conventionnels, augmente considérablement le taux de couverture et donc l'efficacité du bateau porteur. Par exemple, une zone de 10km x 10km par des fonds de 4300m sera couverte à 10 noeuds, en 1 heure environ avec un sondeur multifaisceaux ayant 15 faisceaux de 3°, alors que la même sera sondée en 15 heures avec un sondeur monofaisceau de résolution identique.

Cette zone couverte est obtenue par exemple par formation de faisceaux directifs en réception par une technique connue dans le domaine des sonars.

Ces sondeurs doivent posséder une grande portée sur le fond, pour pouvoir travailler dans des zones suffisamment importantes de la couverture océanique, c'est-à-dire à au moins 6000m (97 % de la surface couverte par les océans).

Cette portée impose l'emploi de basses fréquences (inférieures à 20 KHz). De ce fait et à cause de la résolution requise (de l'ordre de 3° ou moins, de l'ouverture à 3dB des diagrammes de rayonnement suivant les deux axes) les antennes des systèmes classiques sont encombrantes donc difficiles et coûteuses à installer sur un bateau.

La présente invention présente l'avantage par rapport à l'art antérieur de permettre une réalisation d'un sondeur avec des dimensions d'antenne inférieures à 1 mètre, grâce à l'utilisation d'une antenne paramétrique. Grâce à cet encombrement réduit, on diminue les coûts d'installation et de maintenance et il devient possible de l'installer sur de petits navires. Il est possible en plus d'utiliser les mêmes antennes en exploitant directement les signaux haute fréquence pour un sondeur petits fonds. Cette antenne paramétrique peut être montée dans la coque du navire ou dans un "poisson" remorqué ce qui éloigne le sondeur des bruits du navire.

Brièvement c'est un sondeur acoustique paramétrique pour des profondeurs pouvant dépasser 6000m comprenant une antenne d'émission et une antenne de réception et des circuits de formation de voies à la réception, dans laquelle l'émission se fait simultanément à deux fréquences primaires $F_0$, $F_i$ produisant par effets non-linéaires une émission à la fréquence différence $f_i = F_0 - F_i$, où $1 \leqslant i \leqslant n$, n étant le nombre de fréquences secondaires, qui comporte des circuits de formation d'au moins deux fois n voies à l'émission, à chacune des n voies correspondant une émission à des fréquences secondaires différentes $(f_1, f_2 \ldots f_n)$, et dont les circuits de formation de voies à la réception forment au moins deux voies de réception correspondant à n voies d'émission, et dans lequel l'émission dans les différentes voies d'émission est séquentielle.

D'autres caractéristiques et avantages ressortiront de la description qui va suivre illustrée par les figures qui représentent :

- figure 1, une vue schématique d'un sondeur multifaisceaux ;

- figure 2, un diagramme temporel des émissions et réceptions pour différents faisceaux ;

- figure 3, un dispositif de stabilisation des faisceaux en tangage du navire ;

- figure 4, un schéma des circuits d'émission paramétrique du sondeur, suivant l'invention ;

- figure 5, un schéma du circuit de réception du sondeur, suivant l'invention ;

- figure 6, un sondeur monté dans un poisson.

Lorsqu'une onde acoustique est émise dans l'eau, les propriétés non-linéaires du milieu font que la célérité de cette onde dépend de l'amplitude instantanée de la pression sonore, la forme sinusoïdale de cette pression se déforme pour tendre vers une forme en dents de scie.

Il en résulte que si deux ondes sonores aux fréquences $F_0$ et $F_1$ dites primaires ou pompes sont émises dans un même volume, elles interagissent pour donner tous les produits d'intermodulation, dont en particulier le signal à la fréquence $F_0 + F_1$ qui se trouve rapidement absorbé et le signal recherché à la fréquence $F_0 - F_1 = f_1$.

3

L'antenne qui rayonne cette basse fréquence $f_1$ n'est donc pas l'antenne, ou transducteur, fixée sous le bateau mais tout le volume "insonifié" par les deux fréquences primaires. Cette antenne allongée, faite d'eau, rayonne sa basse fréquence dans le sens de la propagation des ondes primaires.

Cette antenne allongée a des propriétés caractéristiques telles que directivité en $\sqrt{\lambda/L}$ et de faibles lobes secondaires ( $\lambda$ = longueur d'onde dans l'eau de la vibration à la fréquence $f_1$, L = longueur de cette antenne faite d'eau). C'est ainsi qu'il est possible de générer les diagrammes de rayonnement très fins, beaucoup plus fins que ne l'auraient permis les petites surfaces d'émission générant les diagrammes de rayonnement primaires.

Il est connu de réaliser des sonars utilisant l'acoustique non-linéaire en émettant simultanément à deux fréquences et en recevant à la fréquence "différence" ou secondaire. Les sonars appelés couramment paramétriques sont appliqués notamment pour faire des relevés du fond. Suivant l'invention on utilise comme fréquences primaires des fréquences de l'ordre de 60 KHz et comme fréquences secondaires des fréquences de l'ordre de 10 KHz.

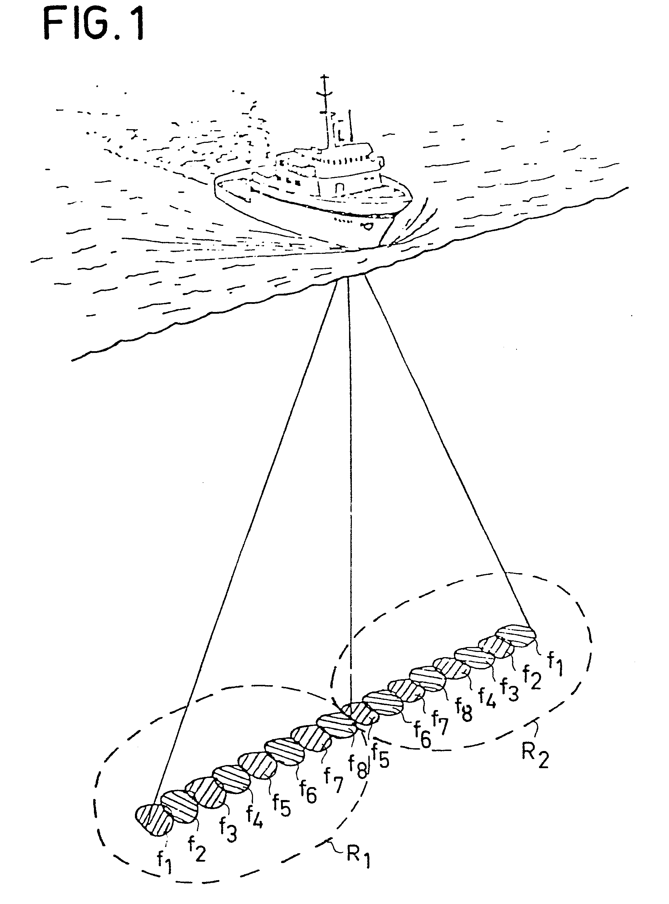

La figure 1 montre une vue schématique du sondeur suivant l'invention. L'antenne d'émission émet simultanément aux fréquences primaires $F_0$ et $F_i$, ce qui génère par effets non-linéaires le faisceau $f_i$ à la fréquence différence. Sur la figure on a représenté avec des hâchures l'intersection des différents faisceaux avec le fond. Ces différents faisceaux d'émission sont obtenus successivement en changeant les fréquences primaires $F_i$ et en formant des voies angulaires à l'émission. Dans l'exemple de cette figure on utilise deux fois chaque fréquence secondaire $f_i$ et l'on forme deux voies à la réception $R_1$ et $R_2$. On a choisi un ordre préférentiel pour les n faisceaux $f_1$, $f_2$, ... $f_8$ (n = 8) pour les deux voies afin d'obtenir une bonne séparation à la réception. De plus préférentiellement, on utilise les fréquences secondaires les plus basses pour les faisceaux les plus écartés angulairement pour minimiser les pertes.

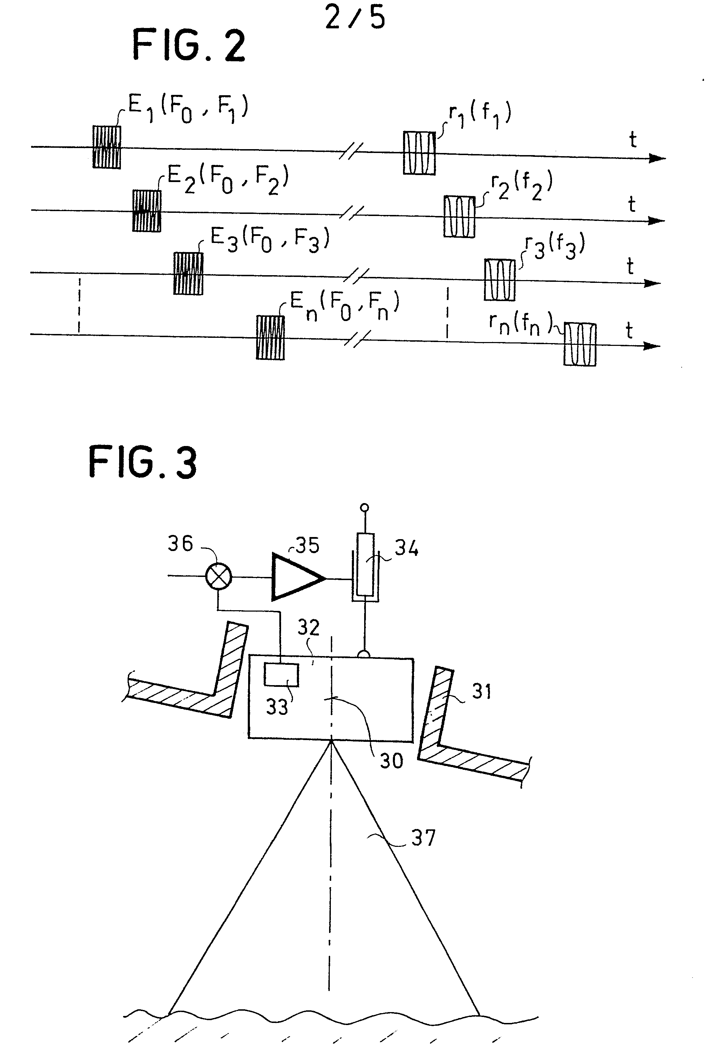

La figure 2 montre un exemple des diagrammes temporels émission-réception pour différents signaux. Ainsi, une émission $E_1$ se fait aux fréquences primaires, $F_0$ et $F_1$ et la réception de l'écho $r_1$ est reçu à la fréquence secondaire $f_1$. L'émission $E_2$ aux fréquences primaires $F_0$, $F_2$ est

4

décalée par rapport à l'émission secondaire $E_1$ et l'écho est reçu à la fréquence $f_2$. Après l'émission $E_n$ aux fréquences primaires $F_0$, $F_n$ on recommence les émissions pour former l'ensemble des faisceaux montrés par la figure 1. La figure montre également les échos $r_1$, $r_2$, ... $r_n$ aux fréquences $f_1$, $f_2$, ... $f_n$.

Le fait d'avoir choisi différentes fréquences permet de discriminer en réception chacun des faisceaux. Mais pour éviter l'utilisation d'un trop grand nombre de fréquences différentes il est souhaitable d'utiliser également la directivité à la réception ce qui corrélativement diminue également la sensibilité au bruit du sondeur.

Par exemple, sur un total de 16 voies de 3° (pour couvrir un intercept de 48°), on pourra utiliser 8 fréquences à l'émission et 2 voies préformées en réception. Les fréquences à l'émission peuvent être constituées par une fréquence porteuse connue à l'intérieur de la bande de réception. Par exemple, les durées d'impulsions étant typiquement de 3 à 5msec sur ces sondeurs, les bandes de réception sont de 200 à 300 Hz. Soit un encombrement spectral total de $300 \times 8 = 2400$ Hz à placer dans la bande 8 - 10,5 KHz. On choisira de préférence les fréquences les plus élevées pour les faisceaux près de la verticale (les pertes par absorption plus élevées sont compensées par un plus faible trajet dans le milieu).

Le tableau I et la figure 1 donnent un exemple de la répartition des fréquences sur l'intercept à couvrir.

On notera cependant sur la figure 1, une distribution des fréquences modifiées à partir de $f_8$ pour éviter que des fréquences identiques soient adjacentes.

TABLEAU I

| fréquence | $f_1$ | $f_2$ | $f_3$ | $f_4$ | $f_5$ | $f_6$ | $f_7$ | $f_8$ |
|---|---|---|---|---|---|---|---|---|
| $f_i$ centrale KHz bande utile ($\pm$ 150 Hz) | 8,15 | 8,45 | 8,75 | 9,05 | 9,35 | 9,65 | 9,95 | 10,25 |

Suivant l'invention on stabilise les faisceaux en émission et en réception, ce qui présente l'avantage de concentrer toute l'énergie dans la zone utile et non de l'étaler et de couvrir tout l'intercept requis, quels que soient les mouvements du porteur et de faciliter l'exploitation en temps réel des relevés.

On peut stabiliser ces faisceaux par des procédés électroniques, dans ce cas chaque capteur élémentaire constituant le transducteur d'émission peut être alimenté par un signal, dont la phase est calculée à tout moment, pour que le diagramme complet de l'antenne rayonne dans une direction fixe dans l'espace. Ce calcul des phases est obtenu à partir des angles de roulis et de tangage mesurés sur le porteur par une centrale de verticale. Cette réalisation reste relativement coûteuse à cause du nombre élevé de capteurs.

Ainsi par exemple, pour une antenne de $\Phi$ = 50 cm, en plaçant chaque source à une distance de $\lambda/2$ de la précédente (écartement requis pour ne pas générer de lobes images parasites au niveau des fréquences pompes) il faudra environ 1000 à 1200 capteurs élémentaires donc autant de générateurs de phases et d'émetteurs.

Il est souvent plus avantageux de ne faire la stabilisation électronique qu'en roulis et de faire une stabilisation mécanique en tangage. Dans ce cas on groupe les capteurs en colonnes élémentaires et on alimente ces colonnes par des phases calculées en fonction de l'angle de roulis.

En tangage par contre (généralement plus faible que le roulis) la base acoustique est stabilisée soit passivement (comme un pendule amorti) soit activement. La figure 3 donne un exemple de réalisation d'une telle stabilisation active à l'aide d'un vérin commandé dynamiquement.

La base acoustique 32 montée autour d'un axe de rotation 30 dans la coque 31 est commandée par un asservissement constitué d'un vérin 34, d'un amplificateur de commande 35, d'un circuit 36 et d'un inclinomètre 33. Le but de l'asservissement des faisceaux 37 est de maintenir en permanence les transducteurs en position horizontale.

Pour compenser les pertes de l'ordre de 25dB dues à la conversion non-linéaire on utilise un traitement cohérent. En effet les sondeurs classiques donnent un niveau sonore de 125dB pour 6000m de profondeur pour une puissance émise de quelques kilowatts. Si l'on utilise un traitement cohérent avec un produit B x T (bande-temps d'émission) de 300, on peut compenser les pertes de conversions non-linéaires. La bande passante étant fixée à 300 Hz par exemple, la durée d'émission sera de 1000 ms pour chacun des faisceaux. Pour réaliser cette fonction on utilisera à la réception des circuits connus tels que des corrélateurs numériques, à ondes de surface ou à dispositifs à transfert de charge.

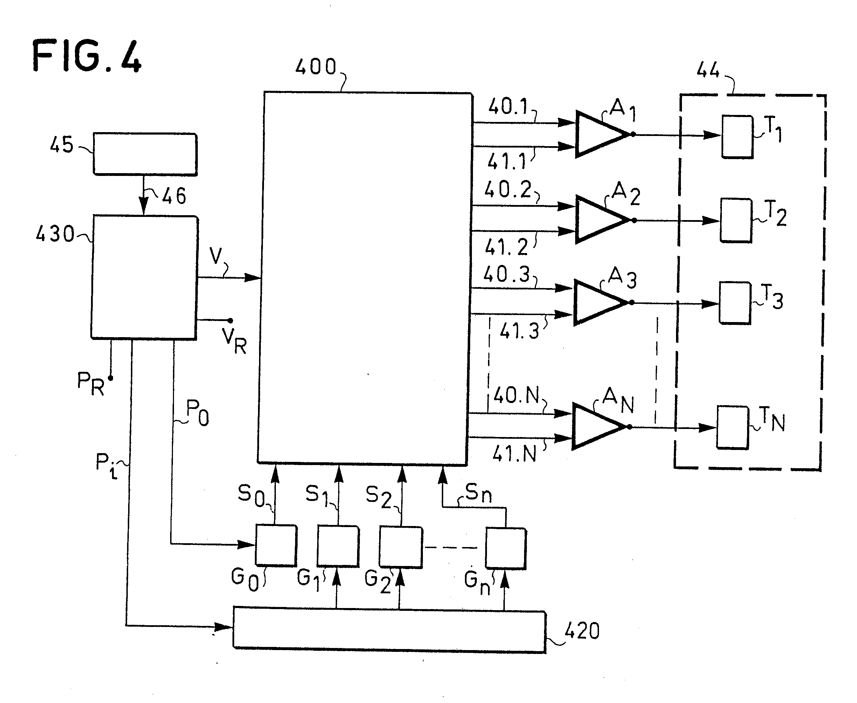

Un processeur 430, figure 4, commande les séquences des impulsions à émettre et les déphaseurs des signaux pour la formation de voies à l'émission par l'ensemble 400. Le processeur reçoit par ailleurs la valeur du roulis 46 mesuré par un appareil de mesure 45. Le dispositif comprend un générateur $G_0$ à la fréquence $F_0$ ainsi que les n générateurs $G_1$, $G_2$, ... $G_n$. Le processeur déclenche en $P_0$ les impulsions du générateur $G_0$ ainsi que les séquences successives des générateurs $G_1$, $G_2$, ... $G_n$ en $P_i$, par intermédiaire du modulateur de codes 420. Ces codes sont des codes connus utilisés pour faire de la compression d'impulsion par exemple des codes de modulation de fréquence. Les signaux $S_0$, $S_1$, $S_2$, ... $S_n$ fournis par ces générateurs $G_0$, $G_1$, $G_2$, ... $G_n$ sont appliqués aux circuits de formation de voies 400 recevant en V les signaux de commande de déphasages.

L'antenne d'émission 44 comprend N colonnes de transducteurs $T_1$, $T_2$, ... $T_N$ parallèles à l'axe du bateau alimentées par les amplificateurs sommateurs $A_1$, $A_2$, ... $A_N$. Ainsi l'amplificateur $A_1$ reçoit les signaux déphasés 40.1 et 41.1. Le signal 40.1 correspond à la fréquence $F_0$ et le signal 41.1 à la fréquence $F_i$. Il en est de même pour les autres signaux appliqués sur les amplificateurs $A_2$ ... $A_N$.

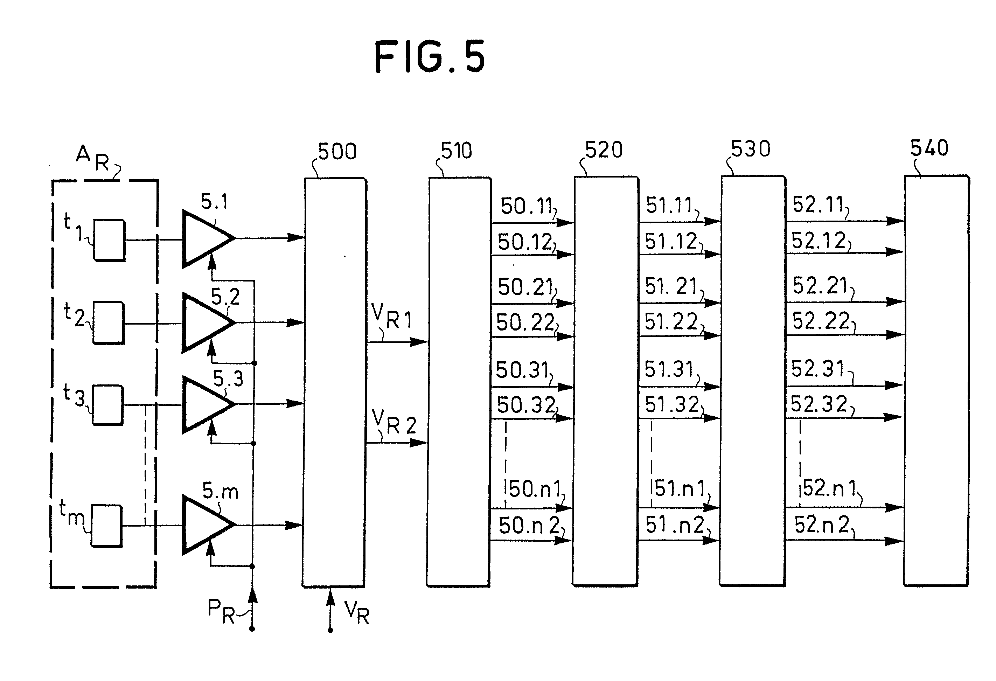

La figure 5 montre le dispositif de réception. L'antenne de réception $A_R$ comprend m colonnes de transducteurs $t_1$, $t_2$ ... $t_m$. Le nombre en est beaucoup plus petit que le nombre N de colonnes de transducteurs de l'antenne d'émission 44. Les colonnes sont parallèles à l'axe du bateau.

Dans un exemple d'application avec des diamètres d'antenne de 50cm on a N = 40 colonnes et m = 8 colonnes. Les signaux reçus par les colonnes de transducteurs de réception $t_1$, $t_2$ ... $t_m$ sont appliqués à des amplificateurs à gain contrôlé en fonction de la profondeur 5.1, 5.2, ... 5.m. Le signal de contrôle $P_R$ étant fourni par le processeur 430, ainsi que les signaux de formation de voies $V_R$ compte tenu du roulis. Les signaux amplifiés sont appliqués au circuit de formation de voies à la réception 500 qui fournit par exemple deux voies $V_{R1}$, $V_{R2}$. Ces deux voies sont appliquées à des filtres 510 centrés sur les fréquences $f_1$, $f_2$, ... $f_n$. Après filtrage on obtient les signaux 50.11 et 50.12 correspondant à la fréquence $f_1$ pour les deux voies de réception et de même pour les autres fréquences. Ces signaux sont appliqués à des circuits de traitement cohérent 520 connus et à des circuits de détection 530 connus. Ainsi pour la fréquence $f_1$, on obtient les signaux traités 51.11 et 51.12 et les signaux détectés 52.11 et 52.12.

Ainsi à la sortie des circuits de détection 530, on obtient les 2n voies 52.11, 52.12, 52.21, 52.22, 52.31, 52.32, ... 52.n1, 52.n2.

Ces voies détectées et les informations correspondantes de hauteur sont exploitées par un autre processeur 540 qui pourra classiquement afficher ces hauteurs, les sélectionner, c'est-à-dire éliminer d'éventuelles fausses valeurs et tracer automatiquement la carte des lignes de niveaux, etc...

A ces circuits BF on adjoint un système de formation des voies HF en réception pour réaliser le sondeur petit fond. On utilisera pour ce faire des circuits classiques en sonar à haute résolution.

L'invention peut être appliquée à un poisson remorqué à 100 ou 200m derrière le bateau et immergé à 50m pour échapper d'une part aux mouvements de la surface, et d'autre part aux bruits du porteur.

Cette solution sera technologiquement identique à la précédente avec cependant les modifications suivantes :

. suppression de la stabilisation mécanique en tangage, le poisson étant dans ce sens très stable. Maintien cependant de la stabilisation électronique en roulis, adjonction d'un multiplex numérique pour remonter vers le bateau les informations des capteurs en réception.

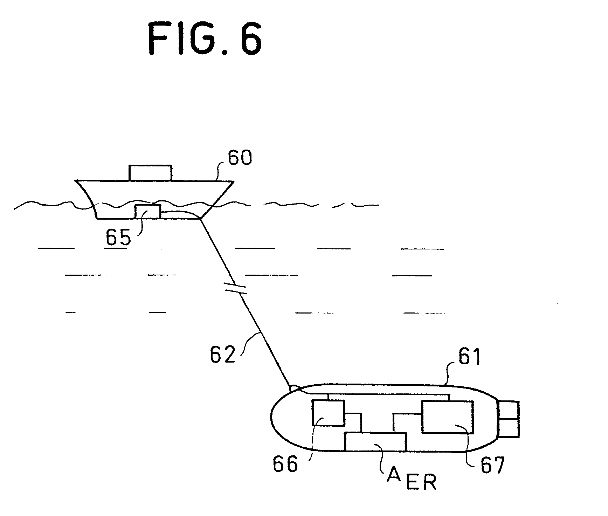

On trouvera entre le fond et la surface les circuits montrés par la figure 6.

Dans le poisson tiré 61 par le cable 62, on place l'antenne émission-réception $A_{ER}$, les amplificateurs et les circuits de formation de voies 66 et 67. Dans le bateau on trouvera l'ensemble de traitement 65 communiquant avec le poisson par un signal multiplexé.

Dans un exemple d'application pour une antenne de bateau ou de poisson on prend :

- diamètre d'antenne : 50cm

- fréquences primaires : 60 KHz – 70 KHz

- fréquences secondaires : 8 à 10 KHz

- dimension de l'antenne : diamètre maximum 500mm

- directivité à l'émission : 3° x 3°

- nombre de faisceaux : 16

- niveau sonore de référence : $10^5$ μ Pascal

- niveau sonore HF : 130 dB

- niveau sonore BF : 105 dB

- gain de traitement : 25 dB

- portée maximum : 7000m

- portée minimum : 100m

- niveau de bruit spectral isotrope (Nis) : – 50dB

Pour cet exemple d'application on a également une réception sur une fréquence primaire haute fréquence avec les caractéristiques suivantes :

- directivité à l'émission ; 3° x 3°

- nombre de faisceaux : 16

- portée maximum (Nis = –50 dB) : 1000m

- portée minimum : 10m

REVENDICATIONS

1. Sondeur acoustique paramétrique pour des profondeurs pouvant dépasser 6000m comprenant une antenne d'émission (44) et une antenne de réception ($A_R$) et des circuits de formation de voies à la réception (500), caractérisé par le fait que l'émission se fait simultanément à deux fréquences primaires ($F_0$, $F_i$) produisant par effets non-linéaires une émission à la fréquence secondaire différence $f_i = F_0 - F_i$, où $1$ $i$ $n$, n étant le nombre de fréquences secondaires, qu'il comporte des circuits de formation de voies à l'émission d'au moins deux fois n voies, à chacune des n voies correspondant une émission à des fréquences secondaires différentes ($f_1$, $f_2$, ... $f_n$) et que les circuits de formation de voies à la réception forment au moins deux voies de réception correspondant à n voies d'émission et que l'émission ($E_i$ ($F_0$, $F_i$)) dans les différentes voies d'émission est séquentielle.

2. Sondeur suivant la revendication 1, caractérisé par le fait que les émissions aux fréquences primaires sont modulées par des codes (420) et que les signaux reçus aux fréquences secondaires ($f_1$, $f_2$, ... $f_n$) sont appliqués (520) à des corrélateurs.

3. Sondeur suivant les revendications 1 et 2, caractérisé par le fait qu'un processeur (430) commande les émissions et les déphasages (400) aux fréquences primaires des N colonnes de transducteurs ($T_1$, $T_2$, ... $T_n$) de l'antenne d'émission (44), qui sont placés suivant l'axe du bateau.

4. Sondeur suivant la revendication 2, caractérisé par le fait que l'antenne de réception comprend m colonnes de transducteurs ($t_1$, $t_2$, ... $t_n$) placées suivant l'axe du bateau, et que les signaux reçus et amplifiés sont appliqués aux circuits de formation de voies (500) les signaux de voies ($V_{R1}$, $V_{R2}$) étant appliqués à des circuits de filtrage (510) aux fréquences ($f_1$, $f_2$, ... $f_n$) fournissant pour chaque voie de réception n signaux (50.11, 50.12), ces signaux après correlation et détection fournissant les signaux (52.11, 52.12) qui sont appliqués à un processeur déterminant notamment les hauteurs de fonds (540).

5. Sondeur suivant la revendication 1, caractérisé par le fait que les signaux reçus par l'antenne de réception sont également appliqués à des

10

circuits de formation de voies aux fréquences primaires fournissant les signaux pour un sondeur petit fond.

6. Sondeur suivant la revendication 1, caractérisé par le fait que les antennes d'émission et de réception ($A_{ER}$) sont placées dans un poisson remorqué (61) et que le navire communique par le câble (62) avec l'antenne par des signaux multiplexés, les signaux de voies étant obtenus à bord du navire.

7. Sondeur suivant la revendication 1, caractérisé par le fait que les antennes (32) se trouvent dans la coque du navire (31) et que les faisceaux (37) sont stabilisés en tangage par un asservissement comportant un inclinomètre (33), le signal de correction étant appliqué par un verin (34).

FIG.1

1/5

0114547

# FIG. 2

$E_1(F_0, F_1)$ $r_1(f_1)$ $t$

$E_2(F_0, F_2)$ $r_2(f_2)$ $t$

$E_3(F_0, F_3)$ $r_3(f_3)$ $t$

$E_n(F_0, F_n)$ $r_n(f_n)$ $t$

# FIG. 3

FIG. 4

3/5

0114547

# FIG.5

# FIG.6